# EUROPEAN PATENT APPLICATION

(11) **EP 2 226 627 A1**
(43) Date of publication of application: **08.09.2010**
(21) Application number: 10155680.1
(22) Date of filing: 05.03.2010
(51) Int. Cl.: G01N 27/403, H01M 8/02

(54) **Liquid electrolyte composition and its use in gas sensors**

(30) Priority: 06.03.2009 GB 0903943; 04.03.2010 US 717273
(71) Applicant: Life Safety Distribution AG, 8610 Uster (CH)
(72) Inventor: Chapples, John, Portsmouth, Hampshire P06 1HS (GB); Jones, Martin, Havant, Hampshire P09 2PN (GB); Meighan, Paul James, Midhurst, GU29 0NU (GB); Pratt, Keith Francis Edwin, Portsmouth, Hampshire P06 1PT (GB)
(74) Representative: Buckley, Guy Julian

(57) **Abstract**

A liquid electrolyte composition obtainable by combining a first component comprising bistrifluoromethanesulfonimide and/or an analogue thereof with a second component comprising a dialkyl sulfone, diaryl sulfone, alkyl aryl sulfone, alkyl acyl sulfone, boric acid, alkyl boronic acid, aryl boronic acid, dialkyl phosphite, trialkyl phosphite, dialkyl phosphate, trialkyl phosphate, alkylene carbonate, alkanoic lactone, preferably alkanoic γ-lactone an analogue of any of these, or mixtures thereof, wherein any of the alkyl, aryl of alkenyl groups may be substituted or unsubstituted. The liquid electrolyte is used in an electrochemical gas sensor.

## Description

This invention relates to a liquid electrolyte for use in electrochemical gas sensors, use of the liquid electrolyte in gas sensors and electrochemical gas sensors, which incorporate these electrolytes.

In its simplest form, an electrochemical gas sensor consists of two electrodes (the anode and the cathode) separated by an electrolyte. When the gas to be detected reacts at one of these electrodes, charge must be able to pass freely between the anode (where oxidation occurs) and the cathode (where reduction occurs) if the sensor's performance is not to be compromised. The electrolyte must therefore provide a highly conductive path through which charge is transported by ionic migration. Traditionally, electrochemical sensors for detecting toxic gases utilise aqueous solutions of conducting ions as electrolytes. For example, in the CiTiceL (trademark) carbon monoxide sensor, an aqueous solution of sulphuric acid provides the electrolyte, and confers high conductivity.

Using carbon monoxide as an example of one of any number of gases that may undergo electrochemical oxidation, the general reactions that occur in a traditional sensor may be illustrated by the following equations. At the working or sensing electrode (anode) carbon monoxide is electrochemically oxidised according to:

CO + H₂O → CO₂+ 2H⁺+ 2e⁻

At the counter electrorode (cathode) a reduction process must take place, for example the reduction of oxygen:

½ O₂ + 2H⁺+ 2e⁻ → H₂O

The overall sensor cell reaction is the sum of these two electrode reactions, namely CO +½O₂ → CO₂.

In general, liquid electrolyte fuel cell sensors employ aqueous solutions of strong mineral acids, alkaline hydroxides or neutral salts, absorbed in a separator material between the electrodes.

An important aspect of such electrochemical sensors is water balance. The sensor is, necessarily, in direct communication with the external environment often via a diffusion barrier. Therefore, water can transfer between the liquid electrolyte in the cell and the environment in any situation where there is a differential between the concentration of water vapour within the cell and the water vapour concentration of the environment on the other side of the diffusion barrier.

When environmental conditions are very dry, water vapour will diffuse out of the cell and the volume of the aqueous electrolyte will decrease until the electrolyte concentration reaches a value at which its water vapour pressure equals that of the external atmosphere. Conversely, in wet external conditions, water vapour will diffuse into the cell, diluting the electrolyte until equilibrium is established.

This water transfer can, in some cases, compromise the reliability of the sensor and limit the range of environments in which it can be used.

For example, in moist, cold conditions, an aqueous electrolyte could be diluted to such an extent that its melting point rises above the temperature of the environment, and therefore, the electrolyte freezes, which in turn prevents the electrochemical conduction from one electrode to the other.

In dry conditions, the electrolyte could lose such an amount of water that the continuity of the electrolyte between the electrodes is disrupted. It is also possible in dry conditions that the solute concentration could exceed its solubility and result in the crystallisation. Alternatively, in the case of strong mineral acids, the electrolyte might become excessively concentrated and attack the seals and containment materials.

In theory, non-aqueous electrolyte sensors could offer advantages over aqueous systems. In particular, a low vapour pressure and freedom from water balance considerations could extend the humidity range over which the sensor is effective. Additionally, excluding water as the solvent opens up the possibility of extending the operating potential range before electrolyte decomposition occurs, which in theory would enable higher electrode activity to be achieved and may even allow otherwise non-reactive gases to be detected. Furthermore, it may also be possible to extend the upper temperature limit of operation, when water is not used as the solvent.

However, attempts to utilise non-aqueous solvent electrolytes have been relatively unsuccessful. In particular, the higher freezing points of some non-aqueous solvents are an obvious disadvantage in cold conditions. Further problems arise in relation to containment and sealing, and the fact that many organic solvents wet PTFE and cannot therefore be used with PTFE-bonded gas diffusion electrodes.

The use of ionic liquids as liquid electrolytes in electrochemical gas sensors has been proposed as a solution to the water balance problems encountered with aqueous systems. Ionic liquids are salts, which exist as liquids at relatively low temperatures, for example <100°C. Of particular interest are room temperature ionic liquids (RTILs), which are salts that are liquids at room temperature. Since ionic liquids, in general, have a negligible vapour pressure, many of the problems relating to evaporation of the electrolyte are negated. WO2004/017443 describes the use of an ionic liquid as the electrolyte in electrochemical gas sensor. The ionic liquid used has a negligible or non-measurable vapour pressure. Examples of the cations that may be used as part of the ionic liquid are imidazolium or pyridinium cations. Examples of suitable anions are halides, nitrates, nitrites, tetraflouroborates, hexafluorophosphates, trifluoromethanesulfonates and other polyfluoroalkanesulfonates, e.g. nonaflate, bis(trifuoromethylsulfonyl)imides, methylsulfates, acetates, fluoroacetates and other anions of fluoroalkanoic acid. The specific examples of ionic liquid electrolytes given are methyl-octyl-imidazolium-chloride and butyl-methyl-imidazolium-bis-trifluoromethane-sulfonimide. Each of these is an aprotic ionic liquid.

US2006/0278536 describes a sensor that utilises an aprotic ionic liquid as the electrolyte. GB2426343 also discloses ionic liquids as electrolytes for a sensor. The preferred ionic liquid in this case is ethyl-methyl-imidazolium-bis(trifluoromethylsulphonyl)imide. GB2395564 describes gas sensors wherein the electrolyte is preferably 1-ethyl-3-methylimidazoline tetrafluoroborate or 1-ethyl-3-methylimidazoline chloride.

It is expected that a lack of proton availability could limit the usefulness of aprotic ionic liquids as electrolytes, in particular for the sensing of CO. In addition, the aprotic ionic liquids that are described in each of these documents tend to have a high viscosity, which limits their speed of response, especially at low temperatures.

The present inventors have found a solution to the above-mentioned problems, by providing a liquid electrolyte as defined in claim 1.

The invention provides a liquid electrolyte obtainable by combining a first component comprising bistrifluoromethanesulphonimide and/or an analogue thereof with a second component comprising, a dialkyl sulfone, diaryl sulfone, alkyl aryl sulfone, alkyl acyl sulfone, boric acid, alkyl boronic acid, aryl boronic acid, dialkyl phosphite, trialkyl phosphite, dialkyl phosphate, trialkyl phosphate, alkylene carbonate, alkanoic lactone, preferably alkanoic γ-lactone an analogue of any of these, or mixtures thereof, wherein any of the alkyl, aryl of alkenyl groups may be substituted or unsubstituted.

The invention also provides an electrochemical gas sensor for sensing a target gas, the sensor comprising a gas sensing electrode; a counter electrode; and a liquid electrolyte with which both the gas sensing electrode and the counter electrode are in contact, wherein the liquid electrolyte is as defined in any of claims 1 to 10.

As used herein, the term "liquid electrolyte" is defined as a composition that is capable of carrying an electric current by movement of ions through the electrolyte and, at its operating temperature and pressure is in the liquid state. Preferably, the electrolyte has a melting point below 60°C, more preferably below 40°C, still more preferably below 20°C, still more preferably below 10°C and most preferably the electrolyte has a melting point below 0°C.

As used herein, the term "alkyl" indicates a saturated branched or straight hydrocarbon chain. Said alkyl comprises 1-20, preferably 1-12, such as 1-6, such as 2-4 carbon atoms. The term includes the subclasses normal alkyl (n-alkyl), secondary and tertiary alkyl, such as methyl, ethyl, *n*-propyl, isopropyl, n-butyl, isobutyl, sec.-butyl, *tert*.-butyl, pentyl, isopentyl, hexyl and isohexyl.

As used herein, the term "alkenyl" indicates a mono-, di-, tri-, tetra- or pentaunsaturated hydrocarbon radical comprising 2-10 carbon atoms, in particular 1-6 carbon atoms, such as 2-4 carbon atoms, e.g. ethenyl, allyl, propenyl, butenyl, pentenyl, nonenyl, or hexenyl.

As used herein, the term "aryl" indicates a radical of aromatic carbocyclic rings comprising 6-20 carbon atoms, such as 6-14 carbon atoms, preferably 6-10 carbon atoms, in particular 5- or 6-membered rings, optionally fused carbocyclic rings with at least one aromatic ring, such as phenyl, naphthyl, anthracenyl, indenyl or indanyl.

As used herein, the phrase "acyl" indicates a radical of the formula -COR, wherein R is alkyl, aryl or alkenyl.

As used herein, the phrase "substituted" indicates an alkyl, alkenyl or aryl group in which at least one hydrogen atom is replaced by another element or functional group, wherein that functional group does not destroy the ability of the second component to form a liquid electrolyte when combined with the first component.

Usually this substitution is with a fluorine or chlorine atom.

As used herein, the phrase "unsubstituted" indicates an alkyl, alkenyl or aryl group that is not further functionalised by the replacement of hydrogen with another atom or functional group. According to the present invention, the alkyl, alkenyl or aryl groups of the second component are preferably unsubstituted.

As used herein, "analogue" indicates a compound that has a substantially equivalent structure as another compound which is referred to and wherein the differences between the compounds do not substantially alter the performance of the liquid electrolyte

In the compositions of the invention it is expected that, at least to some extent, proton exchange occurs to give the conjugate base of bistrifluoromethanesulfonimide and the conjugate acid of the second component, which acts as a Brønsted base. If the reaction goes to completion (i.e. the protons are essentially completely transferred from the bistrifluoromethanesulphonimide to the Brønsted base, then the electrolyte will be a protic ionic liquid. Often the liquid electrolyte of the present invention will be a protic ionic liquid. This invention, however, also relates to compositions where there is only partial or even minimal transfer of the protons from acid to base. Whilst not wishing to be bound by theory, it is believed that the electrolytes of the present invention operate via the same electrode reactions that occur in standard aqueous electrolyte sensors. The availability of protons, therefore, may be important for the electrode reactions and thus to provide an electrolyte with sufficient sensitivity.

It has been found that, in general the electrolytes of the present invention are more sensitive when bistrifluoromethanesulfonimide is present in excess with respect to the Brønsted base, for example in a molar ratio of from 1.2:1 to 2:1. However, where the Brønsted base was present in excess, for example in a molar ratio of acid:base of 1:1.2 to 1:2, the water absorption of the electrolyte tended to be reduced. It has been found that a molar ratio of acid:base of from 1:5 to 5:1, preferably from 1:3 to 3:1, more preferably from 1:1.5 to 1.5:1 and most preferably from 1.2:1 to 1:1.2 provides a suitable balance between these two considrations.

In general only a trace amount of water is required for the electrolyte to function. Usually, water is not deliberately added, but sufficient water is adsorbed into the electrolyte from the atmosphere. This amount of water can be less than 50% by weight of the total electrolyte composition, often it is less than 30%, less than 20% or even less than 10% by weight of the total electrolyte composition.

Whilst each of the possible second components described in claim 1 will provide an electrolyte suitable for use in an electrochemical gas sensor, some of the second components, when combined with bistrifluoromethanesulphonimide give compositions with better properties in terms of sensitivity with respect to the gas to be detected, ease of handling, low hygroscopicity, compatibility with other materials used in the sensor and other desirable properties. Preferably, therefore, the second component comprises dimethyl sulfone, diethyl sulfone, dibutyl sulfone, diphenyl sulfone, ethyl phenyl sulfone, 4-fluorophenyl methyl sulfone, 1-methyl-2-[(phenylsulfonyl)methyl] benzene, methanesulfonylacetone, methylphenylsulfone, 4-(methylsulfonyl)toluene, boric acid, methylboronic acid, isopropylboronic acid, butylboronic acid, (2-methylpropyl)boronic acid, *p-*tolyboronic acid, 3-methyl-1-butylboronic acid, o-tolylboronic acid, phenylethyl boronic acid, 2,3-dimethylphenylboronic acid, 2,6-dimethylphenyl boronic acid, dimethyl phosphite, trimethyl phosphite, diethyl phosphite, bis(2, 2, 2-trifluroethyl) phosphite, tris(2,2,2-trifluroethyl) phosphite, dibutyl phosphate, triethyl phosphate, tributyl phosphate, tripropyl phosphate, propylene carbonate, undecanoic γ-lactone, an analogue of any of these, or mixtures thereof.

More preferably, the second component comprises dimethyl sulfone, diethyl sulfone, dibutyl sulfone, diphenyl sulfone, ethylphenyl sulfone, 4-fluorophenyl methyl sulfone, 1-methyl-2-[(phenylsulfonyl)methyl] benzene, methanesulfonyl acetone, methyl phenyl sulfone, 4-(methylsulfonyl)toluene, boric acid, methyl boronic acid, isopropyl boronic acid, butyl boronic acid, (2-methylpropyl)boronic acid, *p*-tolyboronic acid, 3-methyl-1-butylboronic acid, o-tolylboronic acid, phenyl ethyl boronic acid, 2,3-dimethylphenylboronic acid, an analogue of any of these, or mixtures thereof.

Still more preferably, the second component comprises dimethyl sulfone, diethyl sulfone, dibutyl sulfone, ethyl phenyl sulfone, 1-methyl-2-[(phenylsulfonyl)methyl]benzene, methanesulfonyl acetone, methyl phenyl sulfone, 4-(methylsulfonyl)toluene, methyl boronic acid, 3-methyl-1-butylboronic acid, phenyl ethyl boronic acid, an analogue of any of these or mixtures thereof.

The second component can consist of a dialkyl sulfone, diaryl sulfone, alkyl aryl sulfone, alkyl acyl sulfone, boric acid, alkyl boronic acid, aryl boronic acid, dialkyl phosphite, trialkyl phosphite, dialkyl phosphate, trialkyl phosphate, alkylene carbonate, alkanoic γ-lactone an analogue or derivative of any of these, or mixtures thereof, wherein any of the alkyl, aryl or alkenyl groups may be substituted or unsubstituted.

In one embodiment, the second component can consist of dimethyl sulfone, diethyl sulfone, dibutyl sulfone, diphenyl sulfone, ethyl phenyl sulfone, 4-fluorophenyl methyl sulfone, 1-methyl-2-[(phenylsulfonyl)methyl] benzene, methanesulfonylacetone, methylphenylsulfone, 4-(methylsulfonyl)toluene, boric acid, methylboronic acid, isopropylboronic acid, butylboronic acid, (2-methylpropyl)boronic acid, *p*-tolyboronic acid, 3-methyl-1-butylboronic acid, *o-*tolylboronic acid, phenylethyl boronic acid, 2,3-dimethylphenylboronic acid, 2,6-dimethylphenyl boronic acid, dimethyl phosphite, trimethyl phosphite, diethyl phosphite, bis(2, 2, 2-trifluroethyl) phosphite, tris(2,2,2-trifluroethyl) phosphite, dibutyl phosphate, triethyl phosphate, tributyl phosphate, tripropyl phosphate, propylene carbonate, undecanoic γ-lactone, an analogue of any of these, or mixtures thereof.

In another embodiment, the second component can consist of dimethyl sulfone, diethyl sulfone, dibutyl sulfone, diphenyl sulfone, ethylphenyl sulfone, 4-fluorophenyl methyl sulfone, 1-methyl-2-[(phenylsulfonyl)methyl] benzene, methanesulfonyl acetone, methyl phenyl sulfone, 4-(methylsulfonyl)toluene, boric acid, methyl boronic acid, isopropyl boronic acid, butyl boronic acid, (2-methylpropyl)boronic acid, *p*-tolyboronic acid, 3-methyl-1-butylboronic acid, *o-*tolylboronic acid, phenyl ethyl boronic acid, 2,3-dimethylphenylboronic acid, an analogue of any of these, or mixtures thereof.

In yet another embodiment, the second component can consist of dimethyl sulfone, diethyl sulfone, dibutyl sulfone, ethyl phenyl sulfone, 1-methyl-2-[(phenylsulfonyl)methyl]benzene, methanesulfonyl acetone, methyl phenyl sulfone, 4-(methylsulfonyl)toluene, methyl boronic acid, 3-methyl-1-butylboronic acid, phenyl ethyl boronic acid, an analogue of any of these or mixtures thereof.

Whilst the first component is open to the presence of species other than bistrifluoromethanesulfonimide, the performance of the electrolyte is generally better when the first component consists of bistrifluoromethanesulphonimide and/or an analogue thereof.

Whilst, in general, small quantities of further components can be tolerated, the electrolyte preferably consists essentially of
the first component and/or the conjugate base(s) of the first component,
the second component and/or the conjugate acid(s) of the second component, and
water.

Since the first and second components, when combined, provide a liquid electrolyte, it is unnecessary to provide a solvent in the electrolyte. Where no additional organic solvent is used, the problems outlined above in relation to organic solvents are negated (e.g. wetting of PTFE and the loss of solvent to the atmosphere). Preferably, therefore, the electrolyte contains substantially no organic solvent.

As used herein, the term "organic solvent" indicates any liquid component containing carbon other than the first or second components that is capable under the operating conditions of the electrolyte of dissolving the first and/or the second component.

Usually, the first and second components together form at least 50% by weight of the total composition, preferably at least 70% by weight, more preferably at least 85% by weight and most preferably at least 95% by weight of the total liquid electrolyte.

The gas sensor of the present invention may have any of the preferable features discussed above in relation to the electrolyte. Typically the gas sensor comprises a gas sensing electrode; a counter electrode; and a liquid electrolyte with which both the gas sensing electrode and the counter electrode are in contact, and the liquid electrolyte as previously described. The gas sensor may further comprise a reference electrode.

In general, any known construction of an electrochemical gas sensor suitable for liquid electrolytes may be used as a basis for the gas sensor used in the present invention. Any limitations in sensor design or modifications necessary in order to incorporate the liquid electrolyte of the present invention into the sensor will be apparent to the person skilled in the art.

The manufacture of electrochemical gas sensors is more fully described in Advances in Electrochemistry and Electrochemical Engineering, Volume 10, John Wiley & Sons, 1976 and in Techniques and Mechanisms in Gas Sensing, P T Moseley et al., Adam Hilger (IOP Publishing Ltd 1991). Whilst the invention is not limited to any particular construction of electrochemical gas sensor, a sensor suitable for use in the present invention is described, for example, in GB2094005. An alternative construction also suitable for use in the present invention is outlined in GB2371873.

According to one possible construction, the sensor assembly may comprise a first planar (sensing) electrode and a second planar (counter) electrode with a planar hydrophilic non-conducting porous separator interposed between and in contact with the sensing and counter electrodes. The separator is also in contact with a hydrophilic non-conducting porous wick passing through an opening in the plane of the counter electrode and extending into an electrolyte chamber partially filled with an electrolyte. The assembly permits access of a gas to be sensed to the sensing electrode and provides an electrolytic connection between the sensing and counter electrodes in all orientations of the assembly. The sensor may include a third (reference) electrode.

Although the wick may be integral with the separator, for ease of manufacture they are conveniently two separate items of the same material. In a sensor assembly which is conveniently of cylindrical form, the wick is preferably central, and may pass through the counter electrode by means of a hole or a slit, and similarly may pass through a reference electrode.

In an alternative setup for a gas sensor suitable for use in the present invention, the wick can be positioned around a first part of the outer periphery of the counter electrode. In this embodiment, as described in GB2371873A, gas diffusion means can be provided to provide a path for gas to diffuse to or from a second part of the outer periphery of the counter-electrode.

The present invention is particularly applicable to the sensing of oxidisable gases. The target gas that the sensor detects can be carbon monoxide, hydrogen sulphide, ethyl alcohol, sulfur dioxide, nitric oxide and so forth, but the invention may also be applied to the sensing of reducible gases.

Preferably the target gas is CO or H₂S.

As previously discussed the overall sensor cell reaction is the sum of the two electrode reactions. For a carbon monoxide sensing cell, this is usually:

CO + ½O₂ → CO₂.

By Faraday's law the flux of carbon monoxide reacting at the anode is proportional to the current. If the flux of carbon monoxide to the anode is highly restricted by a suitable diffusion barrier, then substantially all the carbon monoxide reaching the anode can react, thus reducing its concentration at this point to essentially zero, so that the flux of carbon monoxide is determined by the diffusion resistance of the diffusion barrier and the concentration of carbon monoxide outside the diffusion barrier. There is therefore a direct link between the concentration of carbon monoxide and the current delivered by the sensing cell.

Therefore, the gas sensor of the present invention will usually comprise a diffusion barrier. The diffusion barrier may take the form of a thin non-porous plastic film through which the gas to be sensed permeates by a process of solution diffusion. This, however, results in a sensor with a very high temperature co-efficient and a more preferable barrier to use is the gas phase diffusion barrier described in British Patent No. 1571282 which results in a low temperature co-efficient and excellent stability. Alternatively a Knudsen diffusion barrier as described in British Patent Specification No. 2049952 may be used.

The gas sensor may have a chemically selective filter to remove interferent gas components that would otherwise interfere with measurement of the target gas. The target gas in one embodiment of the present invention is carbon monoxide. In another embodiment, the target gas is hydrogen sulphide.

The electrochemical gas sensor may be arranged to oxidise the target gas at the sensing electrode. Alternatively, the sensor may be arranged to reduce the target gas at the sensing electrode.

The electrochemical gas sensor has a sensing electrode and a counter electrode. Usually, it will also comprise a reference electrode. In one embodiment, a four electrode structure may be used. The electrodes are typically mounted within a housing containing the liquid electrolyte.

The electrodes may be any electrodes known in the art suitable for detecting the gas to be sensed. To promote the reaction of the gas to be sensed, for example carbon monoxide, at the sensing electrode, the electrode needs to contain a suitable catalyst preferably in high surface area form. Noble metals such as platinum, gold, palladium, their mixtures or alloys are commonly used sometimes with other additions to help promote the reaction. The chosen electrode material must also be a reasonable electronic conductor. Other preferred electrode materials include iridium, osmium, silver and carbon and mixtures or alloys thereof.

A preferred form of electrode is the so-called hydrophobic gas-diffusion electrode, such as used in fuel cell technology. In this type of electrode the finely divided active catalyst is intimately mixed with fine particles of polytetrafluoroethylene (PTFE) which act as a binder and which, being hydrophobic, are not wetted by aqueous electrolytes and so maintain paths for gas permeation throughout the electrode. This catalyst mix may be contained in a suitable conducting mesh, which is then finally "waterproofed" with a layer of porous PTFE on the gas side. Alternatively, the catalyst mix may be pressure bonded on to PTFE tape. It is envisaged that the ionic nature of the electrolyte of the invention will result in it being largely compatible with hydrophobic electrodes.

When the gas to be sensed is a reducing agent such as carbon monoxide or hydrogen sulphide which is oxidised at the sensing electrode (anode), the counter electrode (cathode) must be capable of sustaining a reduction (cathodic) process. Examples of such electrodes are lead dioxide electrodes and oxygen reduction electrodes. A third, reference electrode, may also be included to monitor or control the sensing electrode.

Clearly all the components of the sensor that will be in contact with the electrolyte such as electrodes, current collectors and the sensor cell housing must be of materials compatible with the electrolyte. For this reason plastics such as acrylics, polyethylene, polypropylene, PTFE, ABS, have been used for constructing cell housings. According to the present invention, the materials used that are in contact with the electrolyte may be any materials that are compatible, but are preferably selected from acrylic, polyethylene, polypropylene and PTFE.

For the sensing of oxidisable gases the counter electrode is conveniently of the same type as the sensing electrode working as an oxygen reduction electrode and receiving its oxygen supply from the ambient air by radial diffusion inwardly through the porous PTFE tape from the perimeter of the tape.

When a reference electrode is provided, it may again be of similar type forming an oxygen-water couple electrode and receiving its oxygen in the same manner as described above for the counter electrode. The reference electrode may be positioned between the sensing and counter electrode or on the face of the counter electrode away from the sensing electrode. In either case the third electrode may have an opening to allow passage of the wick and an additional porous separator in contact with the wick and reference electrode to ensure an electrolyte connection. Alternatively, the third electrode may be provided on the same PTFE tape which carries the counter electrode but separate therefrom and having a separate electrical connection.

The third electrode may be used to monitor or to control the potential of the sensing electrode or to control the base line of the sensor output.

### Examples

### Example 1: Method of Forming Electrolytes

Electrolytes were prepared by a simple additive method in which appropriate amounts of a Brønsted base and the super acid bistrifluoromethanesulfonimide (CAS No 82113-65-3) (HTFSI) were combined in the absence of solvent. Sufficient quantities to give equimolar mixtures of each were accurately weighed into separate sealable sample tubes. As a precaution against moisture contamination, the HTFSI was handled in a glove box under a dry N₂ atmosphere.

The basic procedure for synthesising electrolytes involved slow addition of HTFSI to the vial containing the base compound. This process was performed in a glove box or, if practicable, under a flood of nitrogen. The neutralisation reaction, if feasible, usually commenced within a few minutes of mixing and for solids was evident in the slow formation of a "damp" solid or a liquid. If little or no reaction was evident after several minutes under ambient conditions then the mixture was gently heated with frequent agitation over a hotplate to 60°C (sufficient to cause melting of at least the HTFSI). This allowed more intimate mixing between the two reactants and often initiated the neutralisation where no reaction was discernable at room temperature. After the conversion was complete, the product was allowed to cool.

The addition of the HTFSI to the following base compounds was found to give a liquid at 25°C.
Dimethyl sulfone
Diethyl sulfone
Dibutyl sulfone
Diphenyl sulfone
Ethyl phenyl sulfone
4-Fluorophenyl methyl sulfone
1-Methyl-2-[(phenylsulfonyl)methyl]benzene
Methanesulfonyl acetone
Methyl phenyl sulfone
4-(Methylsulfonyl) toluene
Boric acid
Methylboronic acid
Isopropylboronic acid
Butylboronic acid
(2-Methylpropyl)boronic acid
p-Tolylboronic acid
3-Methyl-1-butylboronic acid
o-Tolylboronic acid
Phenethylboronic acid
4-Ethylphenylboronic acid
2,3-Dimethylphenylboronic acid
2,6-Dimethylphenylboronic acid
Dimethyl phosphite
Trimethyl phosphite
Diethyl phosphite
Bis(2, 2, 2-trifluroethyl) phosphite
Tris(2,2,2-trifluroethyl) phosphite
Dibutyl phosphate
Triethyl phosphate
Tributyl phosphate
Tripropyl phosphate
Propylene carbonate
Undecanoic γ-Lactone

### Example 2: Evaluation of Electrolytes

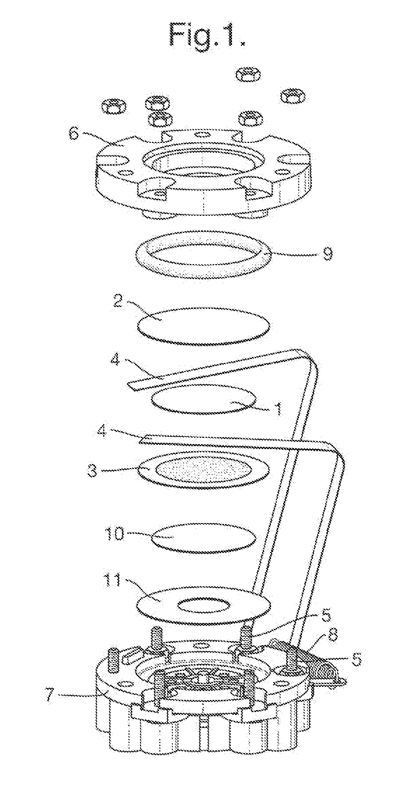

Evaluation of the liquid electrolytes prepared above was performed within a modified form of the standard City Technology Ltd 3-Series CO sensor. Each 2-electrode sensor was assembled as shown in Figure 1, with 150µl of the electrolyte pipetted directly onto the separator (1) positioned between the sensing (2) and the counter/reference electrodes (3). Electrical contact was made via Pt ribbon current collectors (4) that were interleaved between the respective electrodes and the separator, and spot-welded to terminals (5) on the sensor housing. The gas diffusion electrodes (2, 3) were manufactured with Pt black catalysts supported on microporous PTFE Gore membrane discs (diameter 25mm). Sensors were closed by a gasket ring (9) forming a compression seal formed by the top-plate (6) being bolted onto the sensor base (7). A further separator (10) and a PTFE floor seal (11) were positioned between the base (7) and the counter electrode (3). The top-plate (6) has an aperture with a diameter of 14.0mm. As the sensors were being used as test vehicles for measurement of the activity of sensors incorporating the electrolytes, there was no capillary restriction on gas diffusion. Once assembled the sensor was shorted with a spring (8) across the sensing and reference electrode terminals and allowed to stand under ambient lab conditions for ca. 24 hours prior to testing. Three sensors were assembled and used to test the electrolytes prepared using different molar ratios of bistrifluoromethanesulfonimide and methylboronic acid (MBA) or diethylsulfone (DES).

All tests were carried out on a 15-way automated gas testing rig of in-house construction under ambient lab conditions. This automated gas testing rig allowed for individual potentiostatic control and separate gas feeds to 15 sensors simultaneously. As the sensors were of 2-electrode configuration, the reference and counter electrode terminals were shorted together during measurements and the potentiostatic circuit set to hold the sensing electrode at the same potential as the reference/counter electrode (i.e. no imposed bias voltage offset). Test gases were supplied to each individual sensor at a flow rate of 200cm³min⁻¹ (total rig gas flow 3000cm³min⁻¹). The gases used were; synthetic air (BTCA 74 grade), 200ppm CO in synthetic air (Alpha-volumetric standard, tolerance <±1%) and 20ppm H₂S in nitrogen (Alpha-volumetric standard, tolerance <±1%), supplied by BOC. The sensors were allowed to stabilise for approximately 5 minutes after transfer to the automated gas testing rig. They were then subjected to a test regime that involved sequential exposure to air for 3 minutes (to establish baseline), 200ppm CO or 20ppm H₂S for 3 minutes (to give a steady-state response to the target gas), and return to air for 3 minutes (for recovery). Individual sensor signals were recorded as voltage outputs from the potentiostats. The results for one-month old sensors using bistrifluoromethanesulfonimide-methylboronic acid and bistrifluoromethanesulfonimide-diethylsulfone electrolytes are set out in Table 1 and Table 2 respectively. The response times for the sensors to reach 90% of the output obtained after 3 minutes of exposure to the gas are shown as T90.

**Table 1**

| **Electrolyte** | **Sensor No.** | **Electrolyte HTFSI:MBA Molar Ratio** | **Air Baseline Signal** µ**A** | **CO Signal** | | **H₂S Signal** | |
|---|---|---|---|---|---|---|---|
| | | | | **Sensitivity nA/ppm** | **T90 s** | **Sensitivity nA/ppm** | **T90 s** |
| HTFSI- | 1 | 0.25 | 0.12 | 88 | 14 | 3547 | 29 |
| MBA | 2 | 0.25 | 0.09 | 83 | 17 | 3867 | 33 |
| | 3 | 0.25 | 0.09 | 93 | 18 | 3389 | 34 |
| HTFSI- | 1 | 0.50 | 0.09 | 99 | 10 | 3204 | 25 |
| MBA | 2 | 0.50 | 0.08 | 96 | 7 | 3323 | 12 |
| | 3 | 0.50 | 0.08 | 96 | 8 | 3756 | 17 |
| HTFSI- | 1 | 1.00 | 0.04 | 107 | 10 | 3491 | 14 |
| MBA | 2 | 1.00 | 0.14 | 103 | 7 | 3354 | 11 |
| | 3 | 1.00 | -0.15 | 93 | 10 | 3662 | 12 |
| HTFSI- | 1 | 1.50 | 0.01 | 117 | 7 | 3199 | 10 |
| MBA | 2 | 1.50 | 0.09 | 104 | 10 | 2563 | 15 |
| | 3 | 1.50 | 0.10 | 110 | 8 | 4019 | 13 |
| HTFSI- | 1 | 2.00 | 0.06 | 94 | 7 | 1860 | 11 |
| MBA | 2 | 2.00 | 0.06 | 110 | 9 | 3611 | 13 |
| | 3 | 2.00 | -0.13 | 118 | 6 | 3860 | 9 |

**Table 2**

| **Electrolyte** | **Sensor** **No.** | **Electrolyte** **HTFSI:DES** **Molar** **Ratio** | **Air** **Baseline** **Signal** **µA** | **CO Signal** | | **H₂S Signal** | |
|---|---|---|---|---|---|---|---|
| | | | | **Sensitivity** **nA/ppm** | **T90 s** | **Sensitivity** **nA/ppm** | **T90 s** |
| HTFSI- | 1 | 0.25 | 0.01 | 48 | 6 | 2872 | 10 |
| DES | 2 | 0.25 | 0.00 | 47 | 6 | 2628 | 9 |
| | 3 | 0.25 | -0.06 | 44 | 7 | 2655 | 9 |
| HTFSI- | 1 | 0.50 | -0.06 | 54 | 7 | 2599 | 9 |
| DES | 2 | 0.50 | -0.28 | 47 | 7 | 2518 | 9 |
| | 3 | 0.50 | -0.03 | 70 | 7 | 2794 | 9 |
| HTFSI- | 1 | 1.00 | -0.04 | 75 | 10 | 2798 | 9 |
| DES | 2 | 1.00 | -0.01 | 24 | 4 | 2425 | 10 |
| | 3 | 1.00 | 0.03 | 68 | 6 | 2965 | 10 |
| HTFSI- | 1 | 1.50 | -0.40 | 54 | 6 | 2598 | 9 |
| DES | 2 | 1.50 | 0.14 | 54 | 9 | 1962 | 12 |
| | 3 | 1.50 | 0.01 | 60 | 8 | 3388 | 10 |
| HTFSI- | 1 | 2.00 | 0.07 | 59 | 7 | 2679 | 9 |
| DES | 2 | 2.00 | -0.02 | 48 | 7 | 3039 | 11 |
| | 3 | 2.00 | 0.70 | 47 | 7 | 2785 | 12 |

## Claims

1. A liquid electrolyte obtainable by combining a first component comprising bistrifluoromethanesulphonimide and/or an analogue thereof with a second component comprising a dialkyl sulfone, diaryl sulfone, alkyl aryl sulfone, alkyl acyl sulfone, boric acid, alkyl boronic acid, aryl boronic acid, dialkyl phosphite, trialkyl phosphite, dialkyl phosphate, trialkyl phosphate, alkylene carbonate, alkanoic lactone, preferably alkanoic γ-lactone an analogue of any of these, or mixtures thereof, wherein any of the alkyl, aryl of alkenyl groups may be substituted or unsubstituted.

2. A liquid electrolyte according to claim 1 wherein the second component comprises dimethyl sulfone, diethyl sulfone, dibutyl sulfone, diphenyl sulfone, ethyl phenyl sulfone, 4-fluorophenyl methyl sulfone, 1-methyl-2-[(phenylsulfonyl)methyl] benzene, methanesulfonylacetone, methylphenylsulfone, 4-(methylsulfonyl)toluene, boric acid, methylboronic acid, isopropylboronic acid, butylboronic acid, (2-methylpropyl)boronic acid, *p-*tolyboronic acid, 3-methyl-1-butylboronic acid, o-tolylboronic acid, phenylethyl boronic acid, 2,3-dimethylphenylboronic acid, 2,6-dimethylphenyl boronic acid, dimethyl phosphite, trimethyl phosphite, diethyl phosphite, bis(2, 2, 2-trifluroethyl) phosphite, tris(2,2,2-trifluroethyl) phosphite, dibutyl phosphate, triethyl phosphate, tributyl phosphate, tripropyl phosphate, propylene carbonate, undecanoic γ-Lactone, an analogue of any of these, or mixtures thereof.

3. A liquid electrolyte according to claim 2, wherein the second component comprises dimethyl sulfone, diethyl sulfone, dibutyl sulfone, diphenyl sulfone, ethylphenyl sulfone, 4-fluorophenyl methyl sulfone, 1-methyl-2-[(phenylsulfonyl)methyl] benzene, methanesulfonyl acetone, methyl phenyl sulfone, 4-(methylsulfonyl)toluene, boric acid, methyl boronic acid, isopropyl boronic acid, butyl boronic acid, (2-methylpropyl)boronic acid, *p*-tolyboronic acid, 3-methyl-1-butylboronic acid, o-tolylboronic acid, phenyl ethyl boronic acid, 2,3-dimethylphenylboronic acid, an analogue of any of these, or mixtures thereof.

4. A liquid electrolyte according to claim 3, wherein the second component comprises dimethyl sulfone, diethyl sulfone, dibutyl sulfone, ethyl phenyl sulfone, 1-methyl-2-[(phenylsulfonyl)methyl]benzene, methanesulfonyl acetone, methyl phenyl sulfone, 4-(methylsulfonyl)toluene, methyl boronic acid, 3-methyl-1-butylboronic acid, phenyl ethyl boronic acid, an analogue of any of these or mixtures thereof.

5. A liquid electrolyte according to any preceding claim, wherein the first component consists of bistrifluoromethanesulphonamide and/or an analogue thereof.

6. A liquid electrolyte according to claim 1 or claim 5, wherein the second component consists of a dialkyl sulfone, diaryl sulfone, alkyl aryl sulfone, alkyl acyl sulfone, boric acid, alkyl boronic acid, aryl boronic acid, dialkyl phosphite, trialkyl phosphite, dialkyl phosphate, trialkyl phosphate, alkylene carbonate, alkanoic γ-Lactone an analogue of any of these, or mixtures thereof, wherein any of the alkyl, aryl of alkenyl groups may be substituted or unsubstituted.

7. A liquid electrolyte according to claim 6, wherein the second component consists of dimethyl sulfone, diethyl sulfone, dibutyl sulfone, diphenyl sulfone, ethyl phenyl sulfone, 4-fluorophenyl methyl sulfone, 1-methyl-2-[(phenylsulfonyl)methyl] benzene, methanesulfonylacetone, methylphenylsulfone, 4-(methylsulfonyl)toluene, boric acid, methylboronic acid, isopropylboronic acid, butylboronic acid, (2-methylpropyl)boronic acid, *p-*tolyboronic acid, 3-methyl-1-butylboronic acid, o-tolylboronic acid, phenylethyl boronic acid, 2,3-dimethylphenylboronic acid, 2,6-dimethylphenyl boronic acid, dimethyl phosphite, trimethyl phosphite, diethyl phosphite, bis(2, 2, 2-trifluroethyl) phosphite, tris(2,2,2-trifluroethyl) phosphite, dibutyl phosphate, triethyl phosphate, tributyl phosphate, tripropyl phosphate, propylene carbonate, undecanoic γ-lactone, an analogue of any of these, or mixtures thereof.

8. A liquid electrolyte according to any of claim 7, wherein the second component consists of dimethyl sulfone, diethyl sulfone, dibutyl sulfone, diphenyl sulfone, ethylphenyl sulfone, 4-fluorophenyl methyl sulfone, 1-methyl-2-[(phenylsulfonyl)methyl] benzene, methanesulfonyl acetone, methyl phenyl sulfone, 4-(methylsulfonyl)toluene, boric acid, methyl boronic acid, isopropyl boronic acid, butyl boronic acid, (2-methylpropyl)boronic acid, *p*-tolyboronic acid, 3-methyl-1-butylboronic acid, o-tolylboronic acid, phenyl ethyl boronic acid, 2,3-dimethylphenylboronic acid, an analogue of any of these, or mixtures thereof.

9. A liquid electrolyte according to any of claim 8, wherein the second component consists of dimethyl sulfone, diethyl sulfone, dibutyl sulfone, ethyl phenyl sulfone, 1-methyl-2-[(phenylsulfonyl)methyl]benzene, methanesulfonyl acetone, methyl phenyl sulfone, 4-(methylsulfonyl)toluene, methyl boronic acid, 3-methyl-1-butylboronic acid, phenyl ethyl boronic acid, an analogue of any of these or mixtures thereof.

10. A liquid electrolyte according to any preceding claim, wherein the molar ratio of the first component to the second component is from 1:5 to 5:1, preferably from 1:3 to 3:1, more preferably from 1:1.5 to 1.5:1 and most preferably from 1.2:1 to 1:1.2.

11. Use of the liquid electrolyte according to any preceding claim in an electrochemical gas sensor for detecting a target gas.

12. Use according to claim 11, wherein the target gas is CO.

13. Use according to claim11, wherein the target gas is H₂S.

14. An electrochemical gas sensor for sensing a target gas, the sensor comprising a gas sensing electrode; a counter electrode; and a liquid electrolyte with which both the gas sensing electrode and the counter electrode are in contact, wherein the liquid electrolyte is as defined in any of claims 1 to 10.

15. An electrochemical gas sensor according to claim 14, further comprising a reference electrode in contact with the liquid electrolyte.

16. An electrochemical gas sensor according to claim 14 or claim 15, wherein the target gas is CO.

17. An electrochemical gas sensor according to claim 14 or claim 15, wherein the target gas is H₂S.
